# EUROPÄISCHE PATENTANMELDUNG

(11) **EP 1 477 722 A2**
(43) Veröffentlichungstag der Anmeldung: **17.11.2004**
(21) Anmeldenummer: 04101987.8
(22) Anmeldetag: 07.05.2004
(51) Int. Cl.: F17C 3/02

(54) **Druckbehälter zur Speicherung von kryogenem Kraftstoff**

(30) Priorität: 14.05.2003 DE 10321527
(71) Anmelder: Bayerische Motoren Werke Aktiengesellschaft, 80809 München (DE)
(72) Erfinder: Rech, Torsten, 80339 München (DE); Glässer, Jürgen, 85386 Dietersheim (DE); Amsz, Markus, 85777 Fahrenzhausen (DE); Tschakert, Klaus, 80997 München (DE)

(57) **Zusammenfassung**

Die Erfindung betrifft einen Druckbehälter zur Speicherung von kryogenem Kraftstoff in einem Kraftfahrzeug, dessen Mantel aus Behälterteilen zusammengesetzt ist, die mindestens in einer zu deren Mittellängsachse parallelen oder schiefen Ebene abgeschnitten und an den Schnittstellen miteinander und mindestens teilweise durch Einlagen in der Schnittebene verbunden sind. Die Erfindung ist dadurch gekennzeichnet, dass die Form der Behälterteile erzeugt wird, indem ein Kreisquerschnitt mit oder ohne Durchmesserveränderung entlang einer Leitkurve gezogen wird und dass die Einlagen gerade und/oder gewölbte Zwischenböden und/oder Rohr- und/oder Profilverbinder sind.

## Beschreibung

Die Erfindung betrifft einen Druckbehälter zur Speicherung von kryogenem Kraftstoff in einem Kraftfahrzeug, nach dem Oberbegriff des ersten Anspruchs.

Aus DE 32 06 430 A1 ist bereits bekannt, Druckbehälter aus zylinder-, kegel- oder kegelstumpfförmigen Behälterteilen zusammenzusetzen. Es ist auch bekannt, zur Speicherung von kryogenen Kraftstoffen doppelwandige, vakuumisolierte Behälter zu verwenden.

Behälter mit solchen Außenkonturen lassen sich schlecht im Fahrzeugpackage integrieren. Sie lassen wenig Freiheitsgrade, das Fahrzeugpackage über eine flache oder kompakte Bauweise hinaus zu optimieren oder führen zu einem erheblichen Mehrgewicht.

Daher ist es Aufgabe der Erfindung, ein Behälterkonzept bereitzustellen, dessen Formgebung und Aufbau es ermöglicht, Speicher von gasförmigen oder kryogenen Kraftstoffen für Kraftfahrzeuge besser im Fahrzeugpackage zu integrieren.

Die Aufgabe wird mit den kennzeichnenden Merkmalen des Anspruchs 1 gelöst. Bevorzugte Ausführungsformen der Erfindung beschreiben die abhängigen Ansprüche.

Die Erfindung betrifft einen Druckbehälter, zur Speicherung von kryogenem Kraftstoff in einem Kraftfahrzeug, dessen Mantel aus Behälterteilen zusammengesetzt ist, die mindestens in einer zu deren Mittellängsachse parallelen oder schiefen Ebene abgeschnitten und an den Schnittstellen miteinander und mindestens teilweise durch Einlagen in der Schnittebene verbunden sind. Die Erfindung ist dadurch gekennzeichnet, dass die Form der Behälterteile erzeugt wird, indem ein Kreisquerschnitt mit oder ohne Durchmesserveränderung entlang einer Leitkurve gezogen wird und dass die Einlagen gerade und/oder gewölbte Zwischenböden und/oder Rohrund/oder Profilverbinder sind.

Das hat den Vorteil, dass Speichern von gasförmigen oder kryogenen Kraftstoffen aufgrund ihrer Formgebung eine bessere Integration im Fahrzeugpackage ermöglicht wird. Bauteilgewicht und Herstellkosten sind nicht wesentlich höher gegenüber zylindrischen Tanks. Durch diesen geometrischen Aufbau kann in den Behälterwänden ein Membranspannungszustand erreicht werden. Aufgrund der belastungsgerechten Konstruktion können geringe Wandstärken verwendet werden. Versteifungssicken und -profile sind auf den Mantelflächen nicht erforderlich und gehen somit auch nicht ins Fahrzeugpackage ein. Außerdem sind alle für LH2-Speichersysteme notwendige Funktionen, wie Rohrleitungen, Kupplung etc. mit diesem Konzept darstellbar.

Bei einer bevorzugten Ausführungsform der Erfindung ist der Druckbehälter von einem zweiten Behältermantel umgeben und der Zwischenraum zwischen dem Druckbehälter und dem zweiten Behältermantel ist im wesentlichen evakuiert und/oder mit einem Material zur Wärmeisolierung versehen.

Idealerweise kann die Außenfläche des zweiten Behältermantels parallel zur Außenfläche des Druckbehälters durch einen sogenannten Offset um den benötigten Isolationsspalt erzeugt werden, da so der Packagevorteil am besten genutzt werden kann. Es können auch abschnittsweise unterschiedliche Abstände zwischen der Außenfläche des zweiten Behältermantels und der Außenfläche des Druckbehälters gewählt werden, zum Beispiel zur Unterbringung von Rohrleitungen und Ventilen.

Bei einer weiteren bevorzugten Ausführungsform der Erfindung sind als Einlagen im Druckbehälter erste Rohr- und/oder Profilverbinder mit geschlossenem Mantel so eingebaut, dass bei dichtem Druckbehälter zu dessen Fixierung im zweiten Behältermantel zweite Rohr- und/oder Profilverbinder durch die ersten Rohr- und/oder Profilverbinder hindurchgeführt werden können.

Mittels einer solchen Durchführung von Rohren und/oder Profilen ist es vorteilhafterweise möglich, den Druckbehälter im zweiten Behältermantel zur Darstellung eines doppelwandigen vakuumisolierten Behälters aufzunehmen.

Bei vorteilhaften Ausführungen der Erfindung sind weitere Rohr- und/oder Profilverbinder durch die ersten Rohr- und/oder Profilverbinder hindurchgeführt. Insbesondere, wenn drei zweite Rohr- und/oder Profilverbinder durch eine entsprechende Anzahl erster Rohr- und/oder Profilverbinder hindurchgeführt sind, ist es möglich, auf einfache Weise durch Anordnung von drei Aufhängungseinheiten, die nicht auf einer Linie liegen, eine stabile Dreipunktauflage des Druckbehälters im zweiten Behältermantel zu erreichen. Werden weitere Abstützelemente für den zweiten Behältermantel benötigt, so können diese vorteilhafterweise als durchgehende Druckstäbe ohne Kontakt zum Druckbehälter ausgeführt werden.

Bei einer weiteren vorteilhaften Ausführung der Erfindung ist der Druckbehälter von mindestens einem dritten Behältermantel umgeben und der Zwischenraum zu dem zweiten Behältermantel im wesentlichen evakuiert und/oder mit einem Material zur Wärmeisolierung versehen.

Ist um den zweiten Behältermantel noch mindestens ein weiterer Behälter angeordnet, wobei der Zwischenraum evakuiert sein kann, kann der weitere Behälter vorteilhafterweise zum Beispiel als zusätzliche Barriere gegen Vakuumbruch vorgesehen sein.

Im folgenden wird die Erfindung anhand dreier bevorzugter Ausführungsbeispiele weiter erläutert. Die **Figur 1** zeigt in einer Prinzipskizze ein Beispiel zur Erzeugung von Behälterteilformen gemäß der Erfindung in Längs- und Querschnitt. In den **Figuren 2 bis 4** sind drei verschiedene erfindungsgemäße Druckbehälter in Längs- und Querschnitt gezeigt und die **Figur 5** zeigt eine andere Ausführungsform von Rohrverbindern im Schnitt und vergrößert, zur Fixierung des ersten Behältermantels des Druckbehälters im zweiten Behältermantel.

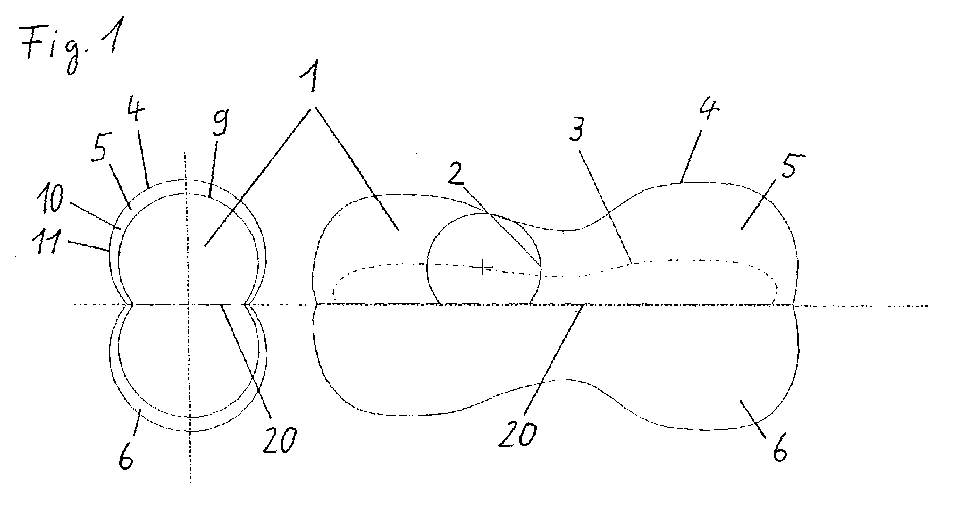

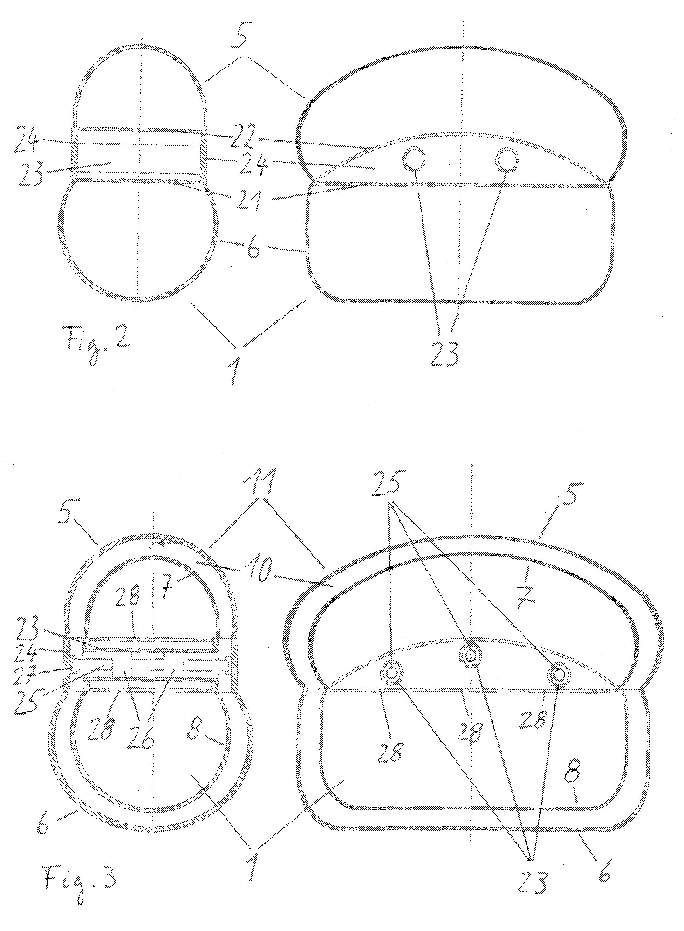

Die Figur 1 zeigt, dass die Form von Behälterteilen 5, 6, (7, 8, Fig.3) für Druckbehälter 1 zur Speicherung von kryogenem Kraftstoff in einem Kraftfahrzeug erfindungsgemäß erzeugt werden kann, indem ein senkrecht zu der Schnittebene stehender Kreisquerschnitt 2 mit Durchmesserveränderung entlang einer Leitkurve 3 gezogen wird. In Figur 1 ist dies gezeigt bei der Entstehung eines zweiten Behältermantels 4, zusammengesetzt aus Behälterteilen 5, 6, die in einer zu deren Mittellängsachse parallelen Ebene 20 abgeschnitten und an den Schnittstellen miteinander verbunden sind. Der zweite Behältermantel 4 umgibt einen entsprechend entstandenen ersten Behältermantel 9 des Druckbehälters 1. Die Außenfläche des bei im wesentlichen evakuiertem Zwischenraum 10 auch als Vakuumbehälter 11 bezeichneten zweiten Behältermantels 4 wird idealerweise durch einen Offset des ersten Behältermantels 9 des Druckbehälters 1 um den benötigten Isolationsspalt 10 erzeugt. In dieser Figur allerdings wurden zur Nutzung des Packagevorteils kontinuierlich unterschiedliche Abstände zwischen Druckbehälter 1 und Vakuumbehälter 11 gewählt, wobei Bereiche größeren Abstands dann zum Beispiel zur Unterbringung von nicht gezeichneten Rohrleitungen oder Ventilen vorgesehen werden können, vorausgesetzt die Behälterform weist weiterhin Kreissegmente als Querschnitte auf.

Statt des Vakuums kann im Zwischenraum 10 zwischen dem Druckbehälter 1 und dem Vakuumbehälter 11 auch ein Material zur Wärmeisolierung vorgesehen sein.

Der so entstandene Druckbehälter 1 ist zusammengesetzt aus mindestens zwei sich teilweise durchdringenden Körpern, die sich aus kreisförmigen Querschnitten aufbauen.

In den Figuren 2 bis 5 werden für gleiche Teile die gleichen Begriffe und Bezugszeichen verwendet. Die Form der Behälterteile 5, 6, 7, 8 für Druckbehälter 1 und Vakuumbehälter 11 wurde entsprechend den Erläuterungen zu Figur 1 erzeugt. Figur 2 zeigt einen Druckbehälter 1 ohne Vakuumbehälter, der mit einem geraden und einem gewölbten Zwischenboden 21, 22, jeweils in der Schnittebene der Behälterteile 5, 6 angebracht, versehen ist. Von den Zwischenböden 21, 22 umgeben sind zwei Rohrverbinder 23, die zwei zwischen die Behälterteile 5, 6 eingebrachte Einlagen 24 verbinden und die, die durch diese Versteifung auftretenden Zugspannungen übernehmen. Einerseits dient dies zur Querversteifung des Druckbehälters 1 im Bereich der Schnittebene der beiden Behälterteile 5, 6, andererseits kann dieses Versteifungselement auch eine Art "Verschiebung" der Schnittflächen der Behälterteile 5, 6 erreichen, und somit die Formgebung des Druckbehälters 1 beeinflussen. Durch die Außenkontur des Versteifungselements wird somit eine Art Leitkurve zum Verlauf der anliegenden Kreisquerschnitte zur Erzeugung der Behälterteile 5, 6 bestimmt. Hierdurch kann eine besonders flache Bauweise erreicht werden und es können nicht quaderförmige Bauräume besser ausgenutzt werden.

Der in Figur 2 beschriebene Aufbau eines Druckbehälters 1 findet sich ähnlich auch in dem Druckbehälter 1 nach Figur 3 wieder. Zusätzlich umgibt dort der Vakuumbehälter 11 den Druckbehälter 1, unter Wahrung eines konstant bleibenden Zwischenraums 10. Außerdem wird bei anderer Anordnung der Rohrverbinder 23 zusätzlich ein dritter Rohrverbinder 23 verwendet. Alle drei Rohrverbinder 23 dienen auch dazu, den Druckbehälter 1 im Vakuumbehälter 11 zu lagern. Dazu werden durch die ersten Rohrverbinder 23 mit geschlossenem Mantel zweite Rohrverbinder 25 hindurchgeführt. Der Druckbehälter 1 ist über die zweiten Rohrverbinder 25 im Vakuumbehälter 11 gelagert, indem Distanzstücke 26 zwischen die ersten Rohrverbinder 23 und die zweiten Rohrverbinder 25 eingefügt sind und Endstücke 27 die Einlagen 24 und die zweiten Rohrverbinder 25 verbinden. Da der Vakuumbehälter 11, im Gegenteil zum Druckbehälter 1, mit Außendruck belastet ist, ändert sich lediglich die Funktion der Versteifung im Bereich der Schnittebenen der Behälterteile 5, 6, 7, 8. Diese muss in diesem Fall Druckspannungen übernehmen. Die Versteifung kann daher als Rohr (zweite Rohrverbinder 25) ausgeführt werden, das die beiden gegenüberliegenden Behälterwände (Einlagen 24) abstützt und durch das Versteifungsrohr (erste Rohrverbinder 23) im Druckbehälter 1 hindurchgeführt wird. Dieses Rohr (zweite Rohrverbinder 25) kann zugleich zur Lagerung des Druckbehälters 1 verwendet werden.

Bei einer Anordnung von drei Aufhängungseinheiten für den Vakuumbehälter 11 im Druckbehälter 1, die nicht auf einer Linie liegen, wird eine stabile Dreipunktauflage erreicht. Werden weitere Abstützelemente für den Vakuumbehälter 11 benötigt, so sind diese als durchgehende Druckstäbe ohne Kontakt zum Druckbehälter 1 auszuführen.

In dieser Versteifung sind Öffnungen 28 vorzusehen, um eine Verbindung zwischen den Innenvolumen der einzelnen Behälterteile 5, 6 des Druckbehälters 1 zu erreichen.

Zugleich ist der Wandbereich des Vakuumbehälters 11 im Bereich der Schnittebene, zum Beispiel durch höhere Wandstärken der Einlagen 24 oder durch Fügen von Versteifungsprofilen zusätzlich zu versteifen.

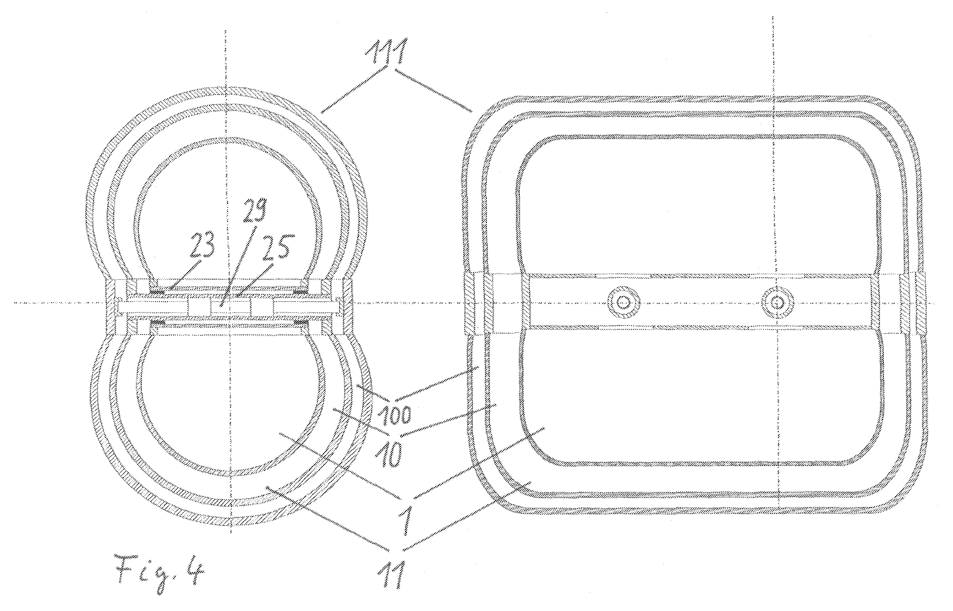

Figur 4 zeigt einen weiteren Druckbehälter 1 mit Vakuumbehälter 11, der von einem dritten Behältermantel 111 umgeben ist. Dabei ist der Zwischenraum 10 vom Druckbehälter 1 zum Vakuumbehälter 11 im wesentlichen evakuiert und/oder mit einem Material zur Wärmeisolierung versehen. Die Aufhängungsrohre (erste, zweite, dritte Rohrverbinder 23, 25, 29) sind mehrfach koaxial ineinander angeordnet und an verschiedenen Stellen miteinander verbunden, um eine möglichst lange Wärmeabbaustrecke zu erzielen.

Ein Zwischenraum 100 zwischen Vakuumbehälter 11 und drittem Behältermantel 111 kann ebenfalls im wesentlichen evakuiert und/oder mit einem Material zur Wärmeisolierung versehen sein. Die äußere Behälterhülle (Behältermantel 111) kann als zusätzliche Barriere gegen Vakuumbruch vorgesehen werden.

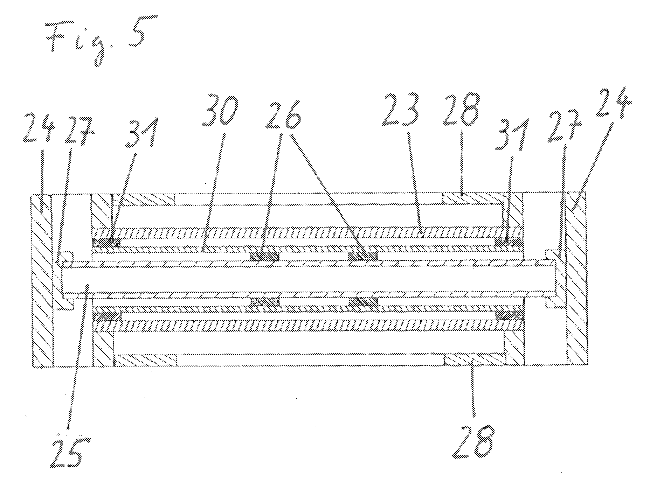

Figur 5 zeigt eine andere Ausführung von Rohrverbindern 23, 25, 30. Eine Anordnung weiterer Rohrverbinder 25, 30 ist durch den ersten Rohrverbinder 23 hindurchgeführt. Hierdurch wird die Wärmeabbaustrecke länger und damit der Wärmeintrag reduziert. Dazu werden durch den ersten Rohrverbinder 23 mit geschlossenem Mantel, der zweite Rohrverbinder 25 und ein dritter Rohrverbinder 30 hindurchgeführt. Der Druckbehälter 1 (Figuren. 3, 4) ist dann über den zweiten Rohrverbinder 25 und den dritten Rohrverbinder 30 im Vakuumbehälter 11 gelagert, indem Distanzstücke 26 zwischen den zweiten Rohrverbinder 25 und den dritten Rohrverbinder 30 eingefügt sind. Weitere Distanzstücke 31 sind zwischen den ersten Rohrverbinder 23 und den dritten Rohrverbinder 30 eingefügt und Endstücke 27 verbinden die Einlagen 24 mit dem zweiten Rohrverbinder 25.

## Patentansprüche

1. Druckbehälter (1), zur Speicherung von kryogenem Kraftstoff in einem Kraftfahrzeug, dessen Mantel aus Behälterteilen (5, 6, 7, 8) zusammengesetzt ist, die mindestens in einer zu deren Mittellängsachse parallelen oder schiefen Ebene (20) abgeschnitten und an den Schnittstellen miteinander und mindestens teilweise durch Einlagen in der Schnittebene (20) verbunden sind, **dadurch gekennzeichnet, dass** die Form der Behälterteile (5, 6, 7, 8) erzeugt wird, indem ein Kreisquerschnitt (2) mit oder ohne Durchmesserveränderung entlang einer Leitkurve (3) gezogen wird und dass die Einlagen gerade und/oder gewölbte Zwischenböden (21, 22) und/oder Rohr- und/oder Profilverbinder (23, 25, 29, 30) sind.

2. Druckbehälter (1) nach Anspruch 1, **dadurch gekennzeichnet, dass** dieser von einem zweiten Behältermantel (4) umgeben ist und der Zwischenraum (10) zwischen dem Druckbehälter (1) und dem zweiten Behältermantel (4) im wesentlichen evakuiert und/oder mit einem Material zur Wärmeisolierung versehen ist.

3. Druckbehälter (1) nach Anspruch 2, **dadurch gekennzeichnet, dass** als Einlagen im Druckbehälter (1) erste Rohr- und/oder Profilverbinder (23) mit geschlossenem Mantel so eingebaut sind, dass bei dichtem Druckbehälter (1) zu dessen Fixierung im zweiten Behältermantel (4) zweite Rohr- und/oder Profilverbinder (25) durch die ersten Rohrund/oder Profilverbinder (23) hindurchgeführt werden können.

4. Druckbehälter (1) nach Anspruch 2, **dadurch gekennzeichnet, dass** weitere Rohr- und/oder Profilverbinder (25, 29, 30) durch die ersten Rohr- und/oder Profilverbinder (23) hindurchgeführt sind.

5. Druckbehälter (1) nach einem der Ansprüche 3 oder 4, **dadurch gekennzeichnet, dass** drei zweite bzw. drei zweite und dritte Rohrund/oder Profilverbinder (25, 30) durch eine entsprechende Anzahl erster Rohr- und/oder Profilverbinder (23) hindurchgeführt sind.

6. Druckbehälter (1) nach einem der Ansprüche 2 bis 5, **dadurch gekennzeichnet, dass** dieser von mindestens einem dritten Behältermantel (111) umgeben ist und der Zwischenraum (100) zu dem zweiten Behältermantel (4) im wesentlichen evakuiert und/oder mit einem Material zur Wärmeisolierung versehen ist.
